(19) Europäisches Patentamt
European Patent Office
Office européen des brevets

(11) **EP 4 653 083 A1**

(12) **EUROPEAN PATENT APPLICATION**
published in accordance with Art. 153(4) EPC

(43) Date of publication:
**26.11.2025 Bulletin 2025/48**

(21) Application number: **24744686.7**

(22) Date of filing: **17.01.2024**

(51) International Patent Classification (IPC):
**B01J 20/22** (2006.01)     **B01D 53/02** (2006.01)
**B01D 53/14** (2006.01)     **B01D 53/62** (2006.01)
**B01J 20/28** (2006.01)     **B01J 20/32** (2006.01)

(52) Cooperative Patent Classification (CPC):
**B01D 53/02; B01D 53/14; B01D 53/62;
B01J 20/22; B01J 20/28; B01J 20/30; B01J 20/32;
Y02C 20/40**

(86) International application number:
**PCT/JP2024/001174**

(87) International publication number:
**WO 2024/154765 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.01.2023 JP 2023006202**

(71) Applicants:
• **Kabushiki Kaisha F.C.C.**
  **Hamamatsu-shi, Shizuoka 431-1394 (JP)**
• **KAWASAKI JUKOGYO KABUSHIKI KAISHA**
  **Kobe-shi, Hyogo 650-8670 (JP)**

(72) Inventors:
• **HASEGAWA, Tomohiro**
  **Hamamatsu-shi, Shizuoka 431-1394 (JP)**
• **SUZUKI, Ryo**
  **Hamamatsu-shi, Shizuoka 431-1394 (JP)**
• **FUKUMOTO, Koji**
  **Kobe-shi, Hyogo 650-8670 (JP)**
• **UMEMURA, Tomoaki**
  **Kobe-shi, Hyogo 650-8670 (JP)**

(74) Representative: **Cohausz & Florack
Patent- & Rechtsanwälte
Partnerschaftsgesellschaft mbB
Bleichstraße 14
40211 Düsseldorf (DE)**

(54) **CARBON DIOXIDE ADSORBENT, CARRIER FOR CARBON DIOXIDE ADSORBENT, AND METHOD FOR PRODUCING CARBON DIOXIDE ADSORBENT**

(57)     Provided are a carbon dioxide-adsorbing material that can firmly retain a carbon dioxide adsorbent made of amines and reliably adsorb and recover carbon dioxide for a long period of time, a carbon dioxide-adsorbing material support, and a method for manufacturing the carbon dioxide-adsorbing material. The carbon dioxide-adsorbing material is a carbon dioxide-adsorbing material 1 that contains a carbon dioxide adsorbent made of amines and has a fiber structure and includes a sheet P formed into a honeycomb shape, a porous carrier 2 dispersed in the fiber structure of the sheet P, and a binder 3 for adhering the porous carrier 2 to the fiber structure of the sheet P, and pores of the porous carrier 2 are filled with the carbon dioxide adsorbent.

**EP 4 653 083 A1**

[ Fig. 1 ]

```
        ┌─────────────────────┐
        │        START        │
        └──────────┬──────────┘
                   │
   ┌───────────────┴───────────────┐
   │   WET SHEET-FORMING STEP       │─── S1
   └───────────────┬───────────────┘
                   │
   ┌───────────────┴───────────────┐
   │   HONEYCOMB-FORMING STEP       │─── S2
   └───────────────┬───────────────┘
                   │
   ┌───────────────┴───────────────┐
   │   ADSORBENT-FILLING STEP       │─── S3
   └───────────────┬───────────────┘
                   │
   ┌───────────────┴───────────────┐
   │        DRYING STEP             │─── S4
   └───────────────┬───────────────┘
                   │
        ┌──────────┴──────────┐
        │         END         │
        └─────────────────────┘
```

**Description**

Technical Field

The present invention relates to a carbon dioxide-adsorbing material containing a carbon dioxide adsorbent made of amines, a support for the carbon dioxide-adsorbing material, and a method for manufacturing the carbon dioxide-adsorbing material.

Background Art

Recently, global warming due to increasing greenhouse gas emission is a problem, in particular, emission of carbon dioxide ($CO_2$) as a greenhouse gas is a problem. Accordingly, techniques for adsorbing and recovering carbon dioxide by thermal swing adsorption or the like have been proposed, and as the carbon dioxide-adsorbing material that is used in the thermal swing adsorption, a granular carrier that is impregnated with an amine compound and adhered to the surface of an aluminum sheet with an adhesive has been disclosed (see Patent Literature 1).

Citation List

Patent Literature

PTL 1: Japanese Unexamined Patent Application Publication No. 2020-32341

Summary of Invention

Technical Problem

However, since the above-mentioned known carbon dioxide-adsorbing material uses a granular carrier impregnated with an amine compound (carbon dioxide adsorbent), there is a risk of volatilization of the amine compound and thereby a significant decrease in the adsorption ability during the process of adsorbing carbon dioxide. Such a decrease in the function of the amine compound may also significantly decrease the ability of recovering carbon dioxide.

The present invention has been made in view of these circumstances and provides a carbon dioxide-adsorbing material that can firmly retain a carbon dioxide adsorbent made of amines and can reliably adsorb and recover carbon dioxide for a long period of time, a support for the carbon dioxide-adsorbing material, and a method for manufacturing the carbon dioxide-adsorbing material.

Solution to Problem

The invention according to claim 1 is a carbon dioxide-adsorbing material containing a carbon dioxide adsorbent made of amines, comprising a sheet that has a fiber structure and is formed in a honeycomb shape, a porous carrier dispersed in the fiber structure of the sheet, and a binder for adhering the porous carrier to the fiber structure of the sheet, wherein pores of the porous carrier are filled with the carbon dioxide adsorbent.

The invention according to claim 2 is the carbon dioxide-adsorbing material according to claim 1, wherein the sheet has a honeycomb shape having a cell density of from 200 to 4892 cpsi.

The invention according to claim 3 is the carbon dioxide-adsorbing material according to claim 1, wherein the porous carrier has a pore diameter of from 1 to 100 nm.

The invention of claim 4 is the carbon dioxide-adsorbing material according to claim 1, wherein the porous carrier is made of silica gel.

The invention according to claim 5 is the carbon dioxide-adsorbing material according to claim 1, wherein a content of the porous carrier is 23.7 wt% or more of the total weight excluding the carbon dioxide adsorbent.

The invention according to claim 6 is the carbon dioxide-adsorbing material according to claim 1, wherein the binder is an organic binder, and a content of the binder is 5 (g) or more per 100 (g) of the porous carrier.

The invention of according to claim 7 is the carbon dioxide-adsorbing material according to claim 1, wherein a content of the carbon dioxide adsorbent is from 28.4 to 75.2 wt% of the total weight of the carbon dioxide-adsorbing material.

The invention of claim 8 is a support for a carbon dioxide-adsorbing material containing a carbon dioxide adsorbent made of amines, wherein the support has a fiber structure, and a porous carrier is dispersed in the fiber structure and is adhered to the fiber structure with a binder.

The invention of claim 9 is a method for manufacturing a carbon dioxide-adsorbing material containing a carbon dioxide adsorbent made of amines, comprising a wet sheet-forming step of generating a floc from a slurry including a fibrous material, a porous carrier, and a binder and then subjecting the floc to sheet forming to obtain a sheet having a fiber structure; a honeycomb-forming step of processing the sheet obtained in the wet sheet-forming step to obtain a honeycomb-shaped structure; and an adsorbent-filling step of immersing the honeycomb-shaped structure obtained in the honeycomb-forming step in the carbon dioxide adsorbent to fill pores of the porous carrier with the carbon dioxide adsorbent.

Advantageous Effects of Invention

According to the present invention, the carbon dioxide-adsorbing material includes a sheet that has a fiber structure and is formed in a honeycomb shape, a porous carrier dispersed in the fiber structure of the sheet, and a binder for adhering the porous carrier to the fiber structure of the sheet, and pores of the porous carrier are filled with a carbon dioxide adsorbent. Consequently, it is possible to firmly retain the carbon dioxide adsorbent made of amines and reliably adsorb and recover carbon dioxide for a long period of time.

Brief Description of Drawings

[Fig. 1] Fig. 1 is a flow chart showing a method for manufacturing a carbon dioxide-adsorbing material according to an embodiment of the present invention.
[Fig. 2] Fig. 2 is a schematic view illustrating a wet sheet-forming step in the method for manufacturing the carbon dioxide-adsorbing material.
[Fig. 3] Fig. 3 is a schematic view illustrating a honeycomb-forming step in the method for manufacturing carbon dioxide-adsorbing material.
[Fig. 4] Fig. 4 is a photomicrograph showing the internal configuration of the carbon dioxide-adsorbing material.
[Fig. 5] Fig. 5 is a schematic view illustrating the internal configuration of the carbon dioxide-adsorbing material.
[Fig. 6] Fig. 6 is a schematic view illustrating a carbon dioxide-adsorbing and recovering apparatus of a thermal swing system using the carbon dioxide-adsorbing material.
[Fig. 7] Fig. 7 is a schematic view illustrating a carbon dioxide-adsorbing and recovering apparatus of a thermal swing system using the carbon dioxide-adsorbing material.
[Fig. 8] Fig. 8 is a graph showing the experimental results for proving the carbon dioxide adsorption property (outlet $CO_2$ concentration) of a carbon dioxide-adsorbing material according to the present embodiment.
[Fig. 9] Fig. 9 is a graph showing the experimental results for proving the carbon dioxide adsorption property ($CO_2$ adsorption amount) of a carbon dioxide-adsorbing material according to the present embodiment.
[Fig. 10] Fig. 10 is a graph showing the experimental results for proving the carbon dioxide adsorption property ($CO_2$ adsorption rate) of a carbon dioxide-adsorbing material according to the present embodiment.
[Fig. 11] Fig. 11 is a graph showing the experimental results for proving the pressure loss of a carbon dioxide-adsorbing material according to the present embodiment.
[Fig. 12] Fig. 12 is a graph showing the experimental results for proving the carbon dioxide adsorption property (outlet $CO_2$ concentration) of a carbon dioxide-adsorbing material according to the present embodiment.
[Fig. 13] Fig. 13 is a graph showing the weight loss rate versus the binder content in a carbon dioxide-adsorbing material according to the present embodiment.
[Fig. 14] Fig. 14 is a graph showing the strength versus the binder content in a carbon dioxide-adsorbing material according to the present embodiment.
[Fig. 15] Fig. 15 is a graph showing the amine-carrying rate versus the pore diameter in a carbon dioxide-adsorbing material according to the present embodiment.
[Fig. 16] Fig. 16 is a graph showing the amine-carrying rate versus the inorganic portion in a carbon dioxide-adsorbing material according to the present embodiment.
[Fig. 17] Fig. 17 is a graph showing the amine-carrying rate versus the amine-carrying bulk density in a carbon dioxide-adsorbing material according to the present embodiment.

Description of Embodiments

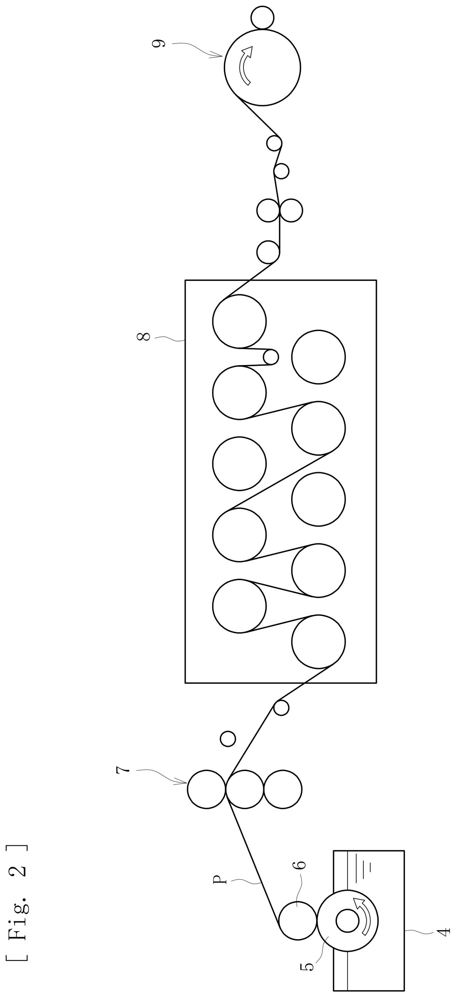

Embodiments of the present invention will now be described specifically with reference to the drawings.
The carbon dioxide-adsorbing material 1 according to the present embodiment contains a carbon dioxide adsorbent made of amines and, as shown in Figs. 2 to 5, includes a honeycomb shaped sheet P having a fiber structure, a porous carrier 2 dispersed in the fiber structure of the sheet P, and a binder 3 for adhering the porous carrier 2 to the fiber structure of the sheet P, and pores of the porous carrier 2 is filled with the amines as the carbon dioxide adsorbent.

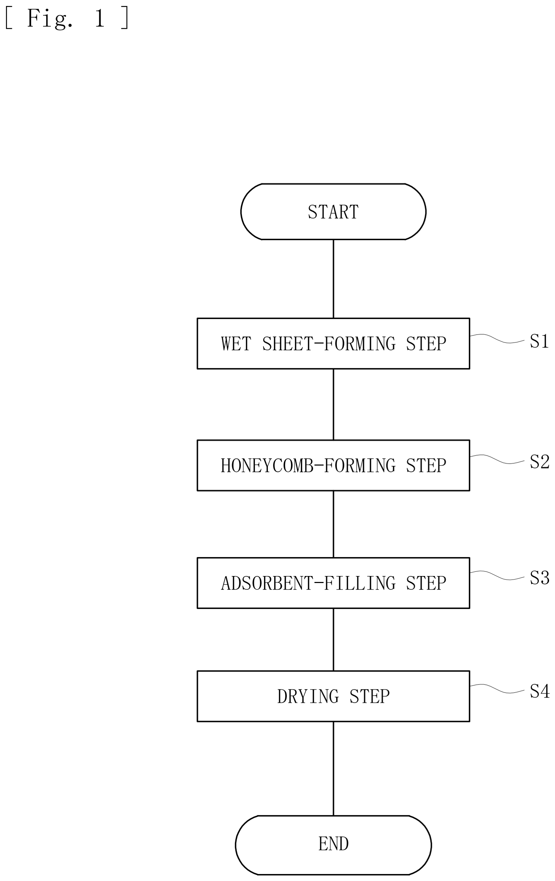

The carbon dioxide-adsorbing material 1 is manufactured through, as shown in Fig. 1, a wet sheet-forming step S1 of generating a floc from a slurry including a fibrous material, a porous carrier, and a binder and then subjecting the floc to sheet forming to obtain a sheet having a fiber structure, a honeycomb-forming step S2 of processing the sheet P obtained in the wet sheet-forming step S1 to obtain a honeycomb-shaped structure, an adsorbent-filling step S3 of immersing the honeycomb-shaped structure obtained in the honeycomb-forming step S2 in a carbon dioxide adsorbent to fill pores of the porous carrier 2 with the carbon dioxide adsorbent, and a drying step S4 of drying the honeycomb-shaped structure that has undergone the adsorbent-filling step S3.

The wet sheet-forming step S1 is a step of throwing a porous carrier 2 made of a powder of silica gel or alumina, a predetermined fiber (heat-resistant fiber), a binder (organic binder), a pore regulator, and so on into a predetermined amount of water to produce an aqueous solution, producing a slurry in which these components are uniformly dispersed, adding a flocculant to the slurry to generate a floc, and then subjecting the floc to sheet forming (wet sheet-forming method) to generate a sheet-like (paper-like) sheet P.

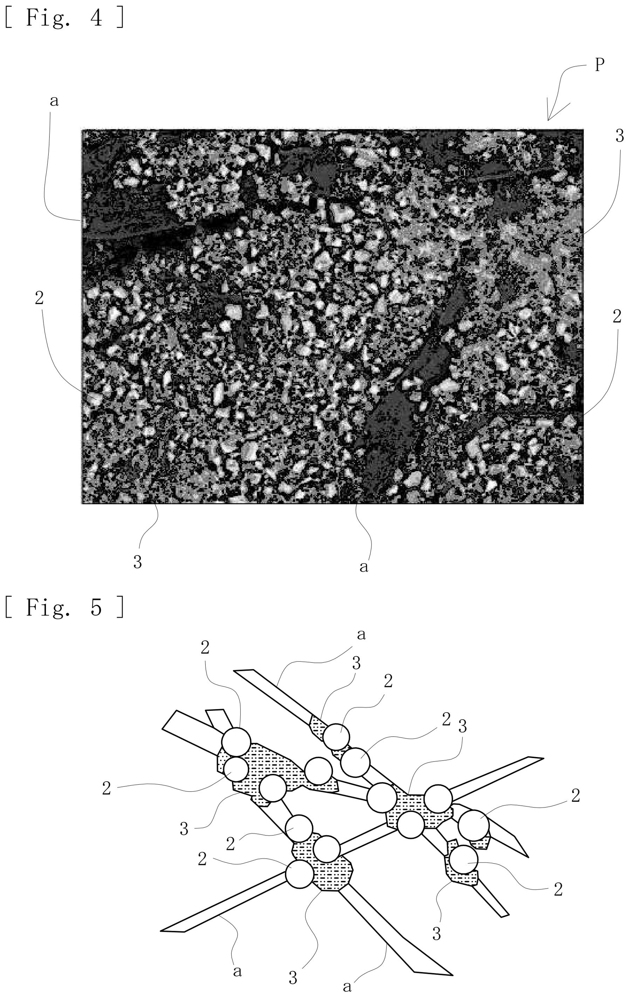

The porous carrier 2 is preferably made of a powder of silica gel having a pore diameter of 1 to 100 nm, and the content thereof is preferably 23.7 wt% or more of the total weight of the carbon dioxide-adsorbing material 1 excluding the amines (carbon dioxide adsorbent). The binder 3 is, as shown in Figs. 4 and 5, preferably made of an organic binder for adhering the porous carrier 2 to the heat-resistant fiber "a", and the content thereof is preferably 5 (g) or more per 100 (g) of the porous carrier 2.

The heat-resistant fiber "a" is made of, for example amorphous ceramics and is formed into a sheet-like shape by a wet sheet-forming method and becomes an aggregate inside the sheet P. Such a heat-resistant fiber "a" is chemically and physically stable and can provide a three-dimensional and highly strong structure by the tightly interwound fibers during sheet-forming (papermaking). The heat-resistant fiber "a" may be configured from another material, and in addition to amorphous ceramics, another fiber (including an organic fiber such as an aramid fiber) can also be used.

The flocculant for generating a floc contains, for example, a polymer flocculant and a metal cation, has a strong charge, and neutralizes the charges of substances that are electrically charged and repel each other in an aqueous solution to interwind them tightly together. The polymer flocculant penetrates between interwound fibers to function so as to further strengthen the binding force, and the metal cation that is preferably used includes $Al^{3+}$ cations in an aqueous solution of alum, aluminum sulfate, or the like.

In the present embodiment, as shown in Fig. 2, a predetermined amount of the floc including a porous carrier 2, a predetermined fiber, a binder, and so on as described above is stored in a storage vessel 4 and is scooped with a circular net 5 (net member that applies a certain amount of slurry to the circumference surface and conveys it to roller 6) that rotates in a range including the top and bottom of the liquid level in the storage vessel 4 to provide a sheet P with a predetermined thickness. This sheet P is continuously conveyed from the roller 6 to a roll press 7 sequentially and is applied with a predetermined pressure by the roll press 7 to be adjusted to a desired thickness.

The sheet P applied with a pressure by the roll press 7 and thereby having a predetermined thickness is continuously sent to a dryer 8, subjected to drying treatment during the process of being conveyed in the dryer 8, and then wound by a winding device 9 sequentially. Consequently, as shown in Figs. 4 and 5, the heat-resistant fiber "a" is tightly and intricately interwound by the binder 3 to form a network-shaped fiber structure, and a sheet P in which the porous carrier 2 is dispersed in and supported by the fiber structure can be obtained.

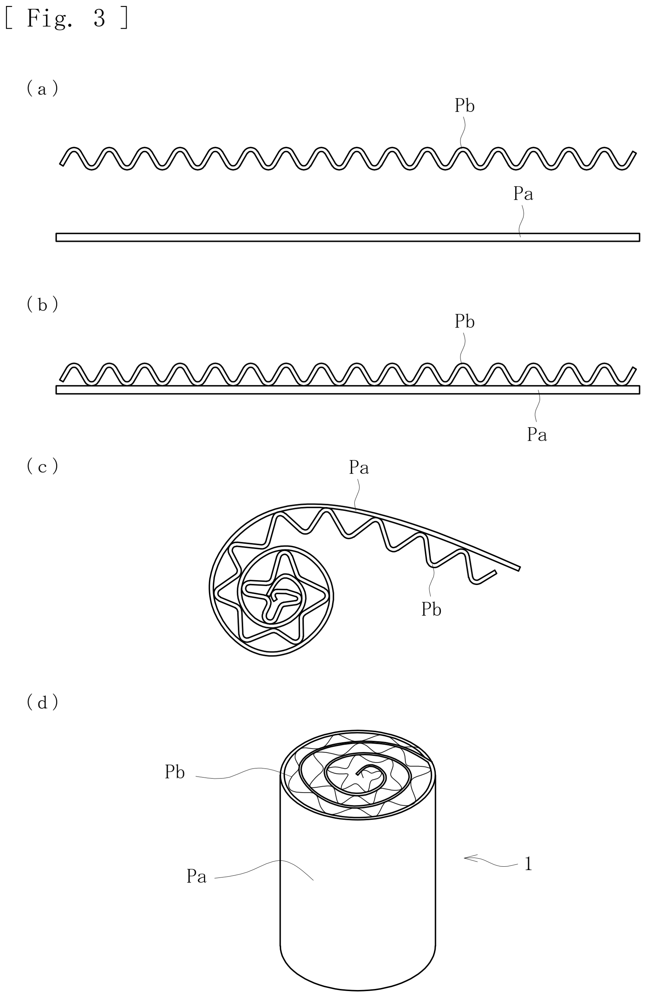

In the honeycomb-forming step S2, as shown in (a) of Fig. 3, two sheets with different shapes, an unfolded sheet Pa with a predetermined length (long shape) and a folded (corrugated shape) sheet Pb with a predetermined length (long shape), are prepared using the sheet P obtained in the wet sheet-forming step S1, and as shown in (b) of Fig. 3, the corrugated-folded sheet Pb is adhered to at least one surface of the sheet Pa with a predetermined length by an adhesive or the like.

Then, as shown in (c) of Fig. 3, the sheets are wound into a roll and then fired by heating at a predetermined temperature to obtain a carbon dioxide-adsorbing material 1 of a honeycomb-shaped structure. The carbon dioxide-adsorbing material 1 is wound into a roll and formed into a cylindrical shape as a whole, but may be formed into another shape such as an angular shape. The fineness (cell density) of the honeycomb shape is preferably set considering the carbon dioxide adsorption property and pressure loss, and is preferably set to, for example, a cell density of from 200 to 4892 cpsi (200 cells or more per inch$^2$).

The adsorbent-filling step S3 is a step of immersing the honeycomb-shaped structure obtained in the honeycomb-forming step S2 in a solution of amines (carbon dioxide adsorbent) and thereby filling pores of the porous carrier 2 dispersed in the honeycomb-shaped structure with the amines. That is, amines penetrate into pores of the porous carrier 2 by capillary phenomenon by immersing the honeycomb-shaped structure in a solution (liquid) of the amines (carbon dioxide adsorbent), and the pores are filled with the amines. The content of the amines as the carbon dioxide adsorbent is preferably from 28.4 to 75.2 wt% of the total weight of the carbon dioxide-adsorbing material 1.

In the present embodiment, since the porous carrier 2 is made of silica gel having a pore diameter of from 1 to 100 nm, the pores can be efficiently filled with the amines by capillary phenomenon. As the amines filling the porous carrier 2, for example, an amine compound, such as diethanolamine, polyethylene imine, and tetraethylene pentaamine, can be used, but another amine compound having an excellent carbon dioxide adsorption property may be used. In the present embodiment, since a fine powder as the porous carrier is kneaded, the gas from which $CO_2$ is removed easily penetrates into pores, and the specific surface area can be improved.

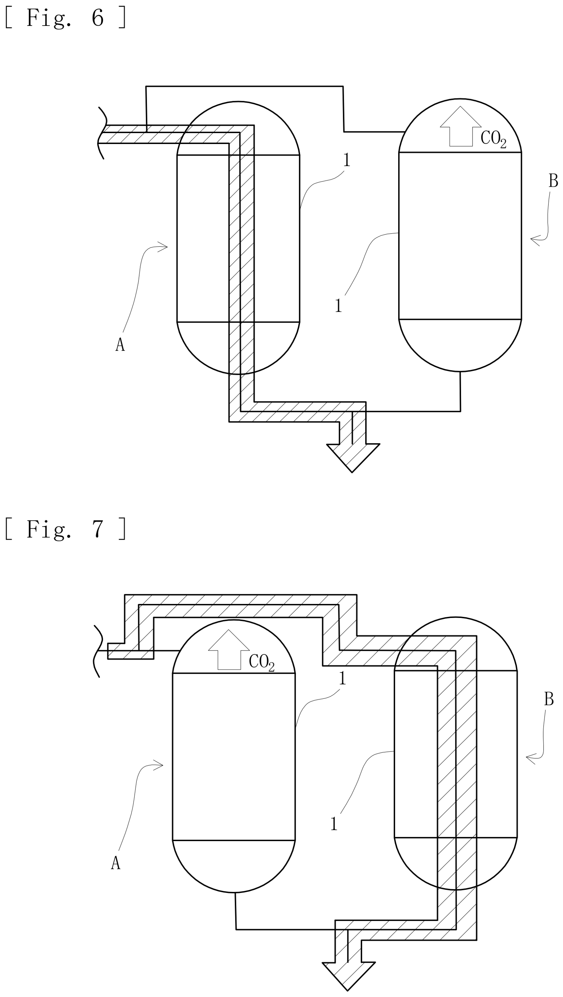

As described above, the carbon dioxide-adsorbing material 1 in which pores of the porous carrier 2 are filled with amines as the carbon dioxide adsorbent through the adsorbent-filling step S3 is dried for a predetermined period of time in the drying step S4. The carbon dioxide-adsorbing material 1 is, for example, as shown in Figs. 6 and 7, accommodated in cases A and B provided to the carbon dioxide-adsorbing and recovering apparatus of a thermal swing system.

More specifically, the carbon dioxide-adsorbing and recovering apparatus to be applied includes cases A and B in which the carbon dioxide-adsorbing material 1 is accommodated, and a gas including carbon dioxide can be selectively introduced into the cases A and B. For example, as shown in Fig. 6, when a gas including carbon dioxide is introduced into one case, i.e., case A, the contained carbon dioxide is adsorbed in the process in which the gas passes through the carbon dioxide-adsorbing material 1 in the case A, and the carbon dioxide adsorbed to the carbon dioxide-adsorbing material 1 is desorbed by heating case B and is collected.

Subsequently, as shown in Fig. 7, when a gas including carbon dioxide is introduced into the other case, i.e., case B, the contained carbon dioxide is adsorbed in the process in which the gas passes through the carbon dioxide-adsorbing material 1 in the case B, and the carbon dioxide adsorbed to the carbon dioxide-adsorbing material 1 is desorbed by heating case A and is collected. Thus, carbon dioxide in a gas can be continuously adsorbed and collected by introducing the gas alternately to cases A and B.

Experiments for proving technological advantages of the carbon dioxide-adsorbing material 1 according to the present embodiment will now be described.

Carbon dioxide-adsorbing materials supporting porous carriers made of different types of silica gel (1) and (2), respectively, and supporting a porous carrier made of alumina are prepared, and pores of each porous carrier are filled with diethanolamine (DEA). The volumes of pores of silica gel (1) and (2) are different from each other.

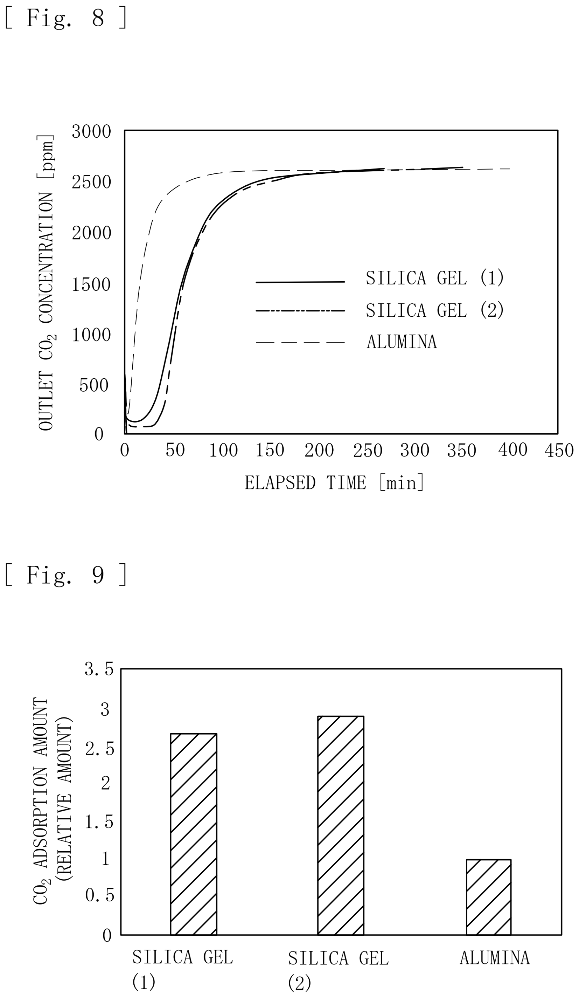

A gas containing $CO_2$ in a concentration of 2600 (ppm) was allowed to pass through each carbon dioxide-adsorbing material at a flow rate (superficial velocity) of 0.05 (m/s), and the outlet $CO_2$ concentration was measured to obtain the experimental results shown in the graph of Fig. 8. Consequently, it is demonstrated that as the porous carrier that is dispersed in the carbon dioxide-adsorbing material, the carbon dioxide-adsorbing rate of silica gel is higher than that of alumina.

Within 1 hour from the start of the experiment, the amounts of $CO_2$ adsorbed to the carbon dioxide-adsorbing materials were compared, and experimental results shown in the graph of Fig. 9 were obtained. Consequently, it is demonstrated that as the porous carrier that is dispersed in the carbon dioxide-adsorbing material, silica gel can adsorb a larger amount of carbon dioxide compared to alumina.

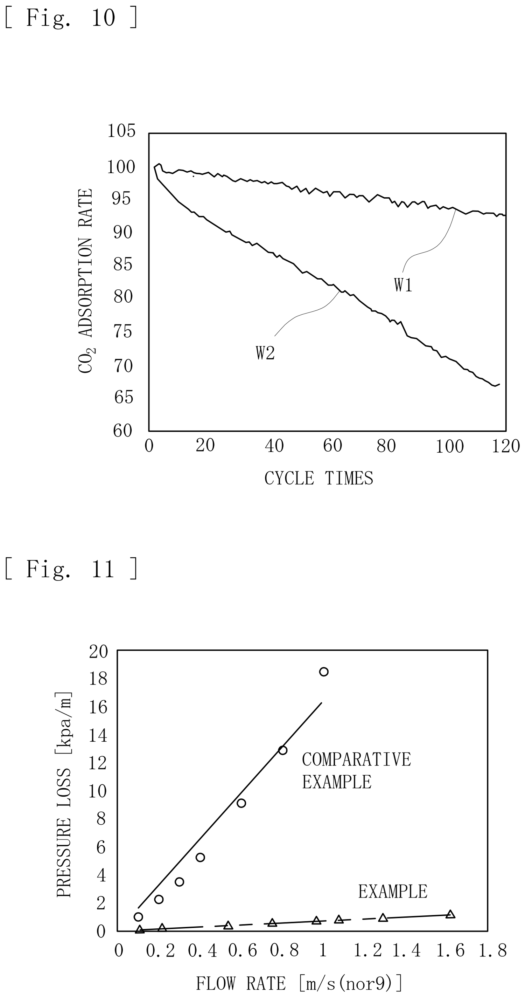

Subsequently, a carbon dioxide-adsorbing material W1 in which silica gel (porous carrier) was filled with diethanolamine (DEA) and a carbon dioxide-adsorbing material W2 in which a porous carrier made of alumina was filled with diethanolamine (DEA) were prepared. Adsorption gas and regeneration gas were alternately allowed to pass through each carbon dioxide-adsorbing material at a flow rate (superficial velocity) of 0.1 m/s repeatedly for 1 hour, and the proportion of $CO_2$ adsorption amount was calculated to obtain the experimental results shown in the graph of Fig. 10. Consequently, it is demonstrated that as the porous carrier that is dispersed in the carbon dioxide-adsorbing material, silica gel is relatively high in the adsorption rate of carbon dioxide and excellent in durability compared to alumina with an increase in the number of cycles.

Subsequently, a carbon dioxide-adsorbing material (Example) in a honeycomb shape with a cell density of about 200 cpsi and a carbon dioxide-adsorbing material (Comparative Example) having a particle diameter of 1 to 2 (mm) not having a honeycomb shape were prepared, and the pressure loss (kpa/m) was measured by variously changing the flow rate (superficial velocity) of the gas of passing through to obtain the experimental results shown in the graph of Fig. 11. Consequently, it is demonstrated that the pressure loss of the carbon dioxide-adsorbing material (Example) having a honeycomb shape having a cell density of 200 cpsi is lower than that of the carbon dioxide-adsorbing material (Comparative Example) not having a honeycomb shape.

The pressure loss ($\Delta p$) can be determined based on the graph shown in Fig. 11 by the following arithmetic expression:

$$\Delta p = \lambda(l/d)(\rho u^2/2) = \lambda(l/(4A/s))(\rho u^2/2).$$

Then, a relational expression of $\Delta p = (2\mu l s^2/A^2)*u = (2\mu l k^2 C/A^2)*u$ can be obtained by substituting $\lambda = 64/Re = 64/(\rho u*((4A/s)/\mu))$ into the above arithmetic expression.

Here, $\lambda$: pipe friction coefficient of empty pipe, l: pipe length (m) of empty pipe, d: pipe diameter (m), $\rho$: fluid density ($kg/m^3$), u: flow rate (m/s), A: flow path cross-sectional area ($m^2$), s: wetted perimeter length (m), $\mu$: viscosity coefficient (Pa·s), k: proportional coefficient, and C: cell density (cpsi).

6

Accordingly, when an equivalent diameter: 4A/s obtained from the flow path cross-sectional area A and the wetted perimeter length s is used instead of the pipe diameter d, since the pressure loss ($\Delta$p) is proportional to the square of the wetted perimeter length s and the wetted perimeter length s is proportional to the square root of the cell density C, it is demonstrated that the pressure loss $\Delta$p is proportional to the cell density C and that the cell density C is preferably 4892 (cpsi) or less (i.e., the cell density is from 200 to 4892 (cpsi)).

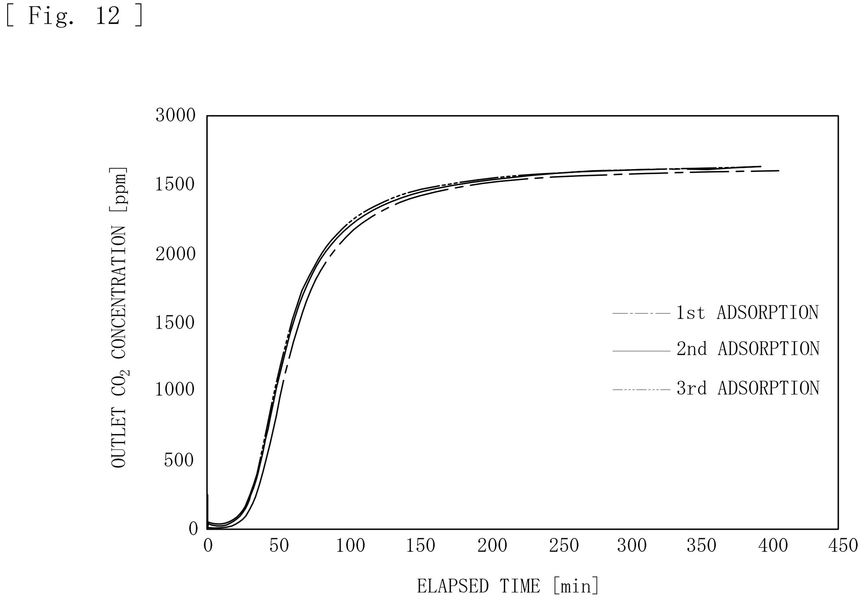

Furthermore, an adsorption process and a collection process of carbon dioxide were performed three times by allowing adsorption gas and collection gas to alternately pass through the honeycomb-shaped carbon dioxide-adsorbing material (Example), and the outlet $CO_2$ gas concentrations at the first, second, and third adsorption were respectively measured to obtain the experimental results shown in the graph of Fig. 12. Consequently, it is demonstrated that the carbon dioxide-adsorbing performance is maintained even when the adsorption process and the collection process are repeated.

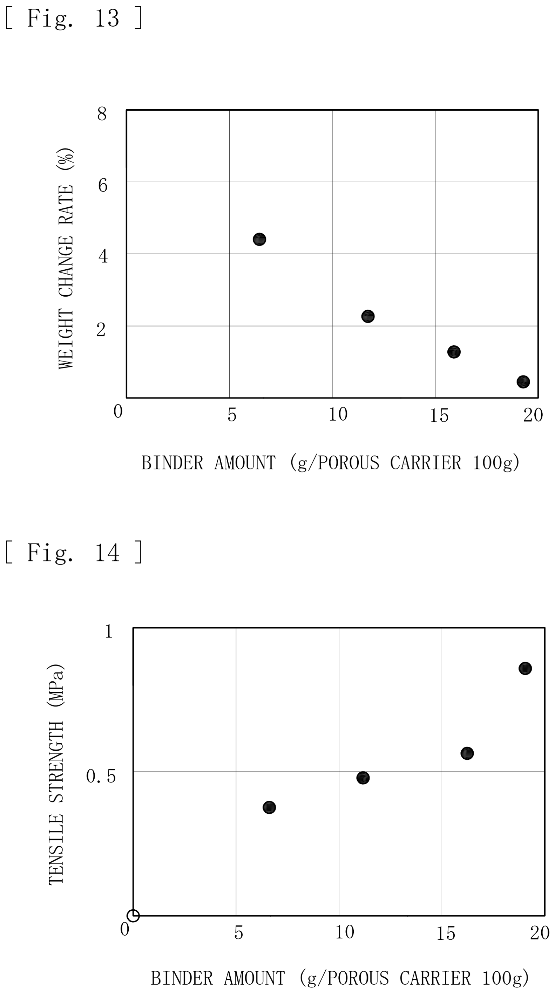

Then, carbon dioxide-adsorbing materials 1 in which the contents of the binder 3 (organic binder) per 100 (g) of the porous carrier 2 were 0 (g), 7 (g), 12 (g), 16 (g), and 19 (g) were prepared, and the weight change rate (%) and the tensile strength (MPa) were measured to obtain the experimental results shown in the graph (weight change rate) of Fig. 13 and the graph (tensile strength) of Fig. 14. Since the carbon dioxide-adsorbing materials 1 preferably includes from 65 to 80 wt% of the porous carrier 2, the content of the binder 3 is most preferably 5 (g) or more per 100 (g) of the porous carrier at most, and is preferably from 6 to 12 (g).

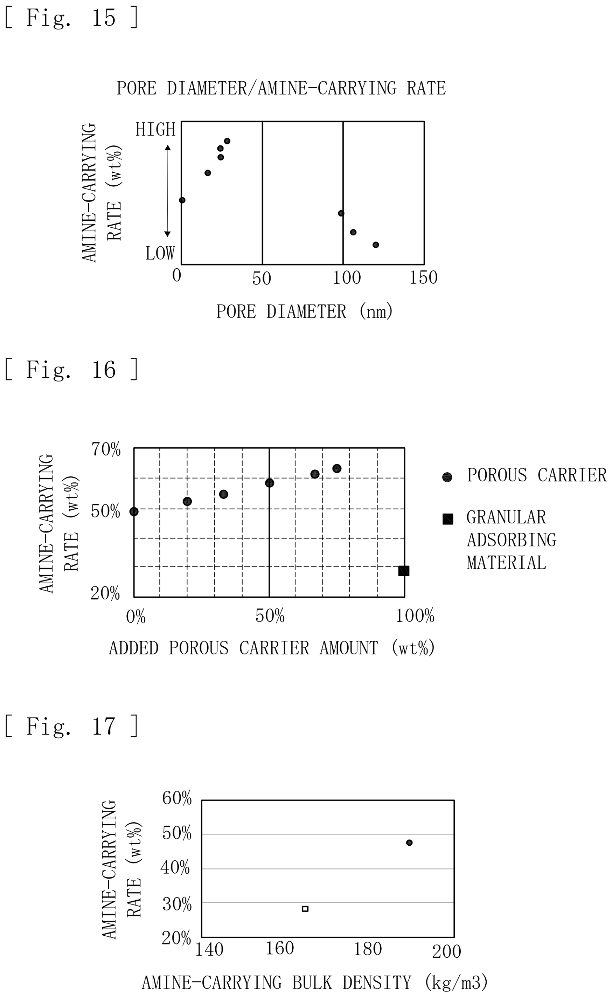

Then, porous carriers having pore diameters different from each other were prepared, and the respective amine-carrying rates were measured to obtain the experimental results shown in the graph of Fig. 15. Consequently, it is demonstrated that the porous carrier has a pore diameter of from 1 to 100 nm to improve the amine-carrying rate. Porous carriers of which the total weights (inorganic portion) excluding the carbon dioxide adsorbent were different from each other were prepared, and the respective amine-carrying rates were measured to obtain experimental results shown in the graph of Fig. 16.

Furthermore, a granular support having an amine-carrying rate of 28.4 (wt%) and a honeycomb-shaped support having an amine-carrying rate of 47.5 (wt%) were prepared and were measured for the amine-carrying bulk densities, respectively, and it was demonstrated as shown in the graph of Fig. 17 that the amine-carrying bulk density of the granular support (white square in the graph) having an amine-carrying rate of 28.4 (wt%) was 164.4 (kg/m$^3$) and that of the honeycombed support having an amine-carrying rate of 47.5 (wt%) was 189.3 (kg/m$^3$). The bulk density of the honeycombed support before carrying the amine is 146.9 (kg/m$^3$).

Consequently, when the amount of the porous material added is 23.7 (wt%), since the amine-carrying bulk density is equal to that of the granular support, it is demonstrated that the amine-carrying rate is improved by that the content of the porous carrier is 23.7 wt% or more of the total weight excluding the carbon dioxide adsorbent. Since the range for establishing a structure is from 23.7 to 90 wt%, the content of the porous carrier is preferably at most from 65 to 80 wt% of the total weight excluding the carbon dioxide adsorbent.

However, the amine-carrying rate must be at least 28.4 (wt%), and when the amount of the support (honeycombed structure) is 100 (g) assuming that the upper limit of the inorganic portion is 90 (wt%), the pore volume is 1.3 mL/g, and the specific gravity of amines (carbon dioxide adsorbent) is 1.09 (g/mL), the amine weight for filling the entire pore volume with amines is as follows:

$$\texttt{Amine weight = 100*0.90*1.3*1.09 = 127.53 (g).}$$

On the other hand, when the entire pore volume of the carbon dioxide-adsorbing material 1 (sheet P) is filled with amines, the amine weight is as follows:

Amine weight = 100*1.62*1.09 = 176.2 (g) (provided that paper pore volume (cc/g) = 1.62).

Accordingly, since the upper limit of the content of amines is (127.53 + 176.2)/403.73*100 = 75.2 (wt%), the content of the carbon dioxide adsorbent (amines) is preferably from 28.4 to 75.2 wt% of the total weight of the carbon dioxide-adsorbing material.

The present embodiment has been described above, but the present invention is not limited thereto, and, for example, the cell density of the sheet P, the pore diameter of the porous carrier 2, the content rate of the binder 3, and so on may be variously changed, and as the porous carrier 2, another powder such as alumina may be used. In the present embodiment, the sheet P is prepared by a wet sheet-forming method, but the sheet P with a fiber structure formed inside may be prepared by another manufacturing method.

Industrial Applicability

It is possible to apply the carbon dioxide-adsorbing material including a sheet that has a fiber structure and is formed into a honeycomb shape, a porous carrier that is dispersed in the fiber structure of the sheet, and a binder that adheres the porous carrier to the fiber structure of the sheet, wherein the pores of the porous carrier are filled with a carbon dioxide adsorbent; the support for the carbon dioxide-adsorbing material; and the method for manufacturing the carbon dioxide-adsorbing material to another aspect.

Reference Signs List

| | |
|---|---|
| 1 | carbon dioxide-adsorbing material |
| 2 | porous carrier |
| 3 | binder |
| 4 | storage vessel |
| 5 | circular net |
| 6 | roller |
| 7 | roll press |
| 8 | dryer |
| 9 | winding device |
| P | sheet |
| Pa, Pb | sheet |

**Claims**

1. A carbon dioxide-adsorbing material containing a carbon dioxide adsorbent made of amines, comprising:

   a sheet that has a fiber structure and is formed in a honeycomb shape;
   a porous carrier dispersed in the fiber structure of the sheet; and
   a binder for adhering the porous carrier to the fiber structure of the sheet,
   wherein pores of the porous carrier are filled with the carbon dioxide adsorbent.

2. The carbon dioxide-adsorbing material according to claim 1, wherein the sheet has a honeycomb shape having a cell density of from 200 to 4892 cpsi.

3. The carbon dioxide-adsorbing material according to claim 1, wherein the porous carrier has a pore diameter of from 1 to 100 nm.

4. The carbon dioxide-adsorbing material according to claim 1, wherein the porous carrier is made of silica gel.

5. The carbon dioxide-adsorbing material according to claim 1, wherein a content of the porous carrier is 23.7 wt% or more of the total weight excluding the carbon dioxide adsorbent.

6. The carbon dioxide-adsorbing material according to claim 1, wherein the binder is an organic binder, and a content of the binder is 5 (g) or more per 100 (g) of the porous carrier.

7. The carbon dioxide-adsorbing material according to claim 1, wherein a content of the carbon dioxide adsorbent is from 28.4 to 75.2 wt% or more of the total weight of the carbon dioxide-adsorbing material.

8. A support for a carbon dioxide-adsorbing material containing a carbon dioxide adsorbent made of amines, wherein the support has a fiber structure, and a porous carrier is dispersed in the fiber structure and is adhered to the fiber structure with a binder.

9. A method for manufacturing a carbon dioxide-adsorbing material containing a carbon dioxide adsorbent made of amines, comprising:

   a wet sheet-forming step of generating a floc from a slurry including a fibrous material, a porous carrier, and a binder and then subjecting the floc to sheet forming to obtain a sheet having a fiber structure;
a honeycomb-forming step of processing the sheet obtained in the wet sheet-forming step to obtain a honeycomb-shaped structure; and
an adsorbent-filling step of immersing the honeycomb-shaped structure obtained in the honeycomb-forming step in the carbon dioxide adsorbent to fill pores of the porous carrier with the carbon dioxide adsorbent.

[ Fig. 1 ]

```
        ┌─────────────────┐
        │      START      │
        └────────┬────────┘
                 │
   ┌─────────────┴───────────────┐
   │  WET SHEET-FORMING STEP     │──── S1
   └─────────────┬───────────────┘
                 │
   ┌─────────────┴───────────────┐
   │  HONEYCOMB-FORMING STEP     │──── S2
   └─────────────┬───────────────┘
                 │
   ┌─────────────┴───────────────┐
   │  ADSORBENT-FILLING STEP     │──── S3
   └─────────────┬───────────────┘
                 │
   ┌─────────────┴───────────────┐
   │      DRYING STEP            │──── S4
   └─────────────┬───────────────┘
                 │
        ┌────────┴────────┐
        │      END        │
        └─────────────────┘
```

[ Fig. 2 ]

[ Fig. 3 ]

（a）

Pb

Pa

（b）

Pb

Pa

（c）

Pa

Pb

（d）

Pb

Pa

1

[ Fig. 4 ]

[ Fig. 5 ]

[ Fig. 6 ]

[ Fig. 7 ]

[ Fig. 8 ]

[ Fig. 9 ]

[ Fig. 10 ]

[ Fig. 11 ]

[ Fig. 12 ]

[ Fig. 13 ]

[ Fig. 14 ]

[ Fig. 15 ]

PORE DIAMETER/AMINE-CARRYING RATE

[ Fig. 16 ]

[ Fig. 17 ]

## INTERNATIONAL SEARCH REPORT

| International application No. |
|---|
| **PCT/JP2024/001174** |

**A. CLASSIFICATION OF SUBJECT MATTER**

***B01J 20/22***(2006.01)i; ***B01D 53/02***(2006.01)i; ***B01D 53/14***(2006.01)i; ***B01D 53/62***(2006.01)i; ***B01J 20/28***(2006.01)i; ***B01J 20/32***(2006.01)i

FI: B01J20/22 A; B01J20/28 Z; B01J20/32 Z; B01D53/02; B01D53/14 100; B01D53/62

According to International Patent Classification (IPC) or to both national classification and IPC

**B. FIELDS SEARCHED**

Minimum documentation searched (classification system followed by classification symbols)

B01J20/22; B01D53/02; B01D53/14; B01D53/62; B01J20/28; B01J20/32

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | CN 103418209 A (KOREA ENERGY RESEARCH INST.) 04 December 2013 (2013-12-04) claims, paragraphs [0017], [0035], [0036], [0039], fig. 1 | 1-9 |
| X | Microfilm of the specification and drawings annexed to the request of Japanese Utility Model Application No. 169741/1984 (Laid-open No. 83433/1986) (DAIKIN INDUSTRIES, LTD.) 02 June 1986 (1986-06-02), claims, page 10, line 14 to page 12, line 6, fig. 1-3 | 1-3, 5-9 |
| X | KR 10-0725266 B1 (KOREA INSTITUTE OF ENERGY RESEARCH) 04 June 2007 (2007-06-04) claims, page 7, lines 16-30, page 8, lines 7-9, 22-24 | 1-8 |
| X | JP 2018-61917 A (SEIBU GIKEN CO., LTD.) 19 April 2018 (2018-04-19) claims, paragraphs [0039], [0061] | 1-8 |

☐ Further documents are listed in the continuation of Box C.   ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 March 2024** | **19 March 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
**Information on patent family members**

International application No.

**PCT/JP2024/001174**

| Patent document cited in search report | | | Publication date (day/month/year) | Patent family member(s) | | | Publication date (day/month/year) |
|---|---|---|---|---|---|---|---|
| CN | 103418209 | A | 04 December 2013 | KR 10-2013-0131970 | | A | |
| JP | 61-83433 | U1 | 02 June 1986 | (Family: none) | | | |
| KR | 10-0725266 | B1 | 04 June 2007 | (Family: none) | | | |
| JP | 2018-61917 | A | 19 April 2018 | US 2018/0099244 paragraphs [0046], [0078], claims | | A1 | |
| | | | | CN | 107915227 | A | |
| | | | | JP | 6181835 | B1 | |

Form PCT/ISA/210 (patent family annex) (July 2022)

## EP 4 653 083 A1

**REFERENCES CITED IN THE DESCRIPTION**

**Patent documents cited in the description**

- JP 2020032341 A